# DEMANDE DE BREVET EUROPEEN

(11) **EP 0 768 473 A1**
(43) Date de publication de la demande: **16.04.1997**
(21) Numéro de dépôt: 96420307.9
(22) Date de dépôt: 09.10.1996
(51) Int. Cl.: F16C 11/06

(54) **embout verrouillable pour élément d'accouplement**

(30) Priorité: 09.10.1995 FR 9512198; 10.04.1996 FR 9604771
(71) Demandeur: OUTILLAGE CHAUFFAGE INDUCTION - O.C.I.-SA, 42350 La Talaudière (FR)
(72) Inventeur: Maitre, Sebastien, 43120 Monistrol sur loire. (FR); Gaillard, Jean, 42100 Saint Etienne (FR)
(74) Mandataire: Thivillier, Patrick

(57) **Abrégé**

Embout verrouillable pour élément d'accouplement comprenant une tête (6) avec une empreinte en creux (2a) de forme générale hémisphérique et présentant des agencements de retenue d'une partie complémentaire sous forme d'une rotule (2)-(7), et aptes à être déformés élastiquement sous un effort d'introduction de ladite rotule, caractérisé en ce que les agents coopèrent avec des moyens de verrouillage (3)-(8) aptes à permettre l'expansion diamétrale ou non de l'empreinte en fonction du positionnement desdits moyens (3)-(8) pour permettre, sous un effort de poussée exercé sur ces moyens de verrouillage, de libérer les agencements de retenue et autoriser, d'une manière concomitante, une expansion diamétrale de l'empreinte sous un effort d'introduction de la rotule (2)-(7) et, après cessation dudit effort de poussée, le blocage desdits agencements correspondant au verrouillage de la rotule

## Description

L'invention se rattache au secteur technique de l'automobile notamment.

L'invention concerne plus particulièrement mais non limitativement les biellettes d'accouplement destinées à être montées au bout de l'arbre de commande de sélection et de passage de la boite de vitesses des véhicules automobiles ou similaires.

D'une manière parfaitement connue, ce type de biellette est constitué par une tige métallique dont l'une au moins de ses extrémités est solidaire d'un boitier métallique agencé pour recevoir une articulation à rotule. Selon une première forme de réalisation le boitier peut être exécuté sous forme d'un manchon cylindrique recevant intérieurement un coussinet hémisphérique en matériau souple. Ce coussinet constitue la cage de la rotule notamment. La tige métallique est généralement fixée par soudure ou autre sur chacun des boitiers métalliques.

On a proposé également des biellettes comprenant une tige dont les extrémités sont solidaires d'un boitier en matériau plastique agencé pour permettre directement le montage avec capacité d'articulation multidirectionnelle de l'élément rotule en tant que tel. Cet état de la technique peut être illustré par l'enseignement du brevet FR 2 670 255.

On a proposé également des solutions permettant l'introduction de la rotule dans la cavité hémisphérique correspondante, sous un effort de pression, mais nécessitant une force de traction élevée pour désolidariser les éléments afin d'éviter que la rotule ne puisse, sous une traction quelconque ou autre, se dégager d'une manière inopinée de la cage hémisphérique. On peut citer par exemple l'enseignement du brevet FR 2 402 797. Ce brevet enseigne une articulation à rotule comportant une cage rigide dans laquelle est monté un coussinet en matière plastique qui présente un logement sphérique destiné à recevoir la rotule. Le fond du coussinet, opposé à l'ouverture du logement, est muni de moyens destinés à fournir une élasticité dans la direction axiale d'introduction ou d'extraction de la rotule. Le coussinet est susceptible de se déplacer axialement par rapport aux parois internes de la cage rigide qui présente une ouverture rétrécie placée en regard de l'ouverture dudit coussinet. Les agencements du fond du coussinet permettent la déformation axiale et son déplacement à l'intérieur de la cage rigide lors d'un effort d'engagement exercé au moment de l'introduction de la tête sphérique de la rotule. Inversement, un effort de traction exercé au niveau de la rotule à tendance à tirer vers le bas du coussinet et de manière concomitante, de le comprimer au niveau de la partie rétrécie de la cage rigide, sous un effort de traction plus élevé que l'effort de poussée correspondant à l'introduction.

Cette solution donne satisfaction dans son ensemble, mais ne peut assurer une sécurité totale et garantir de manière absolue tous risques de désacouplement inopiné entre la rotule et la cage hémisphérique.

Pour tenter de remédier à ces inconvénients, on a proposé d'équiper un embout présentant une empreinte de forme hémisphérique d'un moyen de verrouillage. Plus particulièrement, ces dispositions s'appliquent dans le cas où l'ensemble de l'embout est réalisé en matière plastique. Dans ce but, l'empreinte hémisphérique est formée dans une tête qui est fendue radialement pour permettre une expansion diamétrale de la cage lors de l'effort d'introduction de la rotule. Le moyen de verrouillage est solidaire d'une partie de l'embout et coopère par des agencements de clippage avec une partie complémentaire que présente la tête afin d'interdire toute expansion diamétrale de cette dernière correspondant au verrouillage de la rotule.

Cette solution n'est cependant pas totalement satisfaisante. En effet, pour l'introduction de la rotule dans la cage hémisphérique, l'organe de verrouillage doit nécessairement être ouvert pour permettre l'introduction de la rotule dans la cage compte tenu de l'expansion diamétrale de cette dernière. Après introduction de la rotule, l'opérateur doit verrouiller la tête en vue d'interdire son expansion diamétrale, c'est-à-dire que l'opérateur doit mettre en position de coopération les agencements de clippage entre le moyen de verrouillage et la tête.

On conçoit que cette opération de verrouillage n'est pas automatique lors de l'introduction de la rotule, mais constitue une opération volontaire. Autrement dit, on ne peut exclure le fait qu'après introduction de la rotule dans la cage hémisphérique correspondante de la tête, l'opérateur oublie accidentellement de verrouiller ladite tête. Là encore, la sécurité ne peut être garantie de manière absolue. Tout au contraire, si le moyen de verrouillage n'est pas clippé, les risques de désaccouplement sont encore plus important compte-tenu de la fente pratiquée au niveau de la tête.

L'invention s'est fixée pour but de remédier à ces inconvénients d'une manière simple, sûre, efficace et rationnelle.

Le problème que se propose de résoudre l'invention est d'assurer de manière automatique et concomitante le déverrouillage de l'embout, la mise en place de la rotule et le verrouillage de la rotule à l'intérieur de la cage hémisphérique de l'embout en respectant de manière immuable l'ordre précité.

Pour résoudre ce problème, il a été conçu un embout verrouillable conforme aux caractéristiques de la revendication 1.

Pour résoudre le problème posé, et permettre à volonté et de manière automatique le verrouillage et le déverrouillage de l'embout, les agencements de ladite tête sont constitués par un nez fendu formé en débordement de ladite tête pour être engagé dans une ouverture profilée de la partie de verrouillage.

La fente du nez débouche dans l'empreinte en creux et est prolongée au niveau de la tête pour permettre l'expansion diamétrale de ladite empreinte.

Pour résoudre le problème posé d'assurer automatiquement et chronologiquement le déverrouillage de l'embout, la mise en place de la rotule dans la cage hémisphérique et enfin le verrouillage dudit embout, l'ouverture profilée de la partie de verrouillage comprend successivement une première zone coopérant avec le nez de la tête lorsqu'aucun effort n'est exercé sur ladite partie, les dimensions de cette première zone correspondant environ à celles du nez pour interdire toute expansion diamétrale, et une deuxième zone de dimensions plus importantes et coopèrent avec le nez lorsque un effort est exercé sur la partie de verrouillage pour permettre l'expansion diamétrale.

La partie de verrouillage est constituée par une languette profilée solidaire par l'une de ses extrémités, de l'embout, et dont l'autre extrémité est recourbée dans un plan sensiblement perpendiculaire en présentant l'ouverture dans laquelle est engagé le nez.

Dans le cas d'une application à la commande d'une boite de vitesses d'un véhicule automobile, le corps est formé sensiblement perpendiculairement à la tête et est rendu solidaire de l'extrémité d'une tige ou câble. La languette est positionnée coaxialement au corps et à la tige.

Un autre problème que se propose de résoudre l'invention est d'assurer de manière automatique et concomitante le déverrouillage de la tête, puis la mise en place de la rotule, et enfin le verrouillage de cette dernière à l'intérieur de l'empreinte hémisphérique de la tête, avec la possibilité de monter la tête en combinaison avec une bague de filtration.

Pour résoudre un tel problème, l'empreinte de la tête présente radialement des agencements de retenue de la rotule aptes à être déformés élastiquement sous un effort d'introduction de ladite rotule, l'empreinte étant formée à l'intérieur de la tête en délimitant un espace annulaire pour le montage d'un organe poussoir avec capacité de déplacement guidé, ledit organe présentant des agencements destinés à coopérer ou non avec les agencements de la tête pour permettre l'expansion diamétrale ou non de l'empreinte en fonction du positionnement dudit organe.

Pour résoudre le problème posé de permettre automatiquement l'introduction de la rotule et son verrouillage après introduction dans l'empreinte, l'organe est monté avec capacité de déplacement à l'encontre d'un moyen élastique pour permettre sous un effort de poussée, de libérer les agencements de verrouillage de l'empreinte et autoriser d'une manière concomitante l'expansion diamétrale de l'empreinte sous l'effort d'introduction de la rotule et, après relâchement dudit organe, le blocage automatique desdits agencements pour provoquer d'une manière concomitante le verrouillage de la rotule.

Pour résoudre le problème posé d'assurer le verrouillage de l'empreinte, les agencements de l'empreinte sont constitués par des pattes déformables élastiquement et inscrites dans l'espace annulaire de la tête, la base desdites pattes présentant un profil interne de retenue.

Pour résoudre le problème posé de permettre l'expansion diamétrale de la tête ou bien son verrouillage en fonction du positionnement de l'organe poussoir, les agencements de l'organe poussoir sont constitués par des pattes déformables élastiquement, disposées en correspondance avec celles de l'empreinte, la base desdites pattes présentant un profil externe apte à coopérer avec l'espace annulaire de la tête correspondant au blocage desdites pattes de l'empreinte, ledit profil étant prolongé par un évidement pour permettre l'expansion diamétrale de l'organe en position de dégagement correspondant au déverrouillage pour l'introduction de la rotule.

Pour résoudre le problème posé de combiner la tête avec une bague de filtration, la tête est réalisée à partir d'un corps cylindrique et est montée concentriquement dans une bague élastique filtrante elle-même solidaire d'une douille en matériau rigide.

L'invention est exposée ci-après à l'aide des figures et dessins annexés dans lesquels :
- les figures 1 et 2 sont des vues en perspective d'une forme de réalisation de l'embout selon l'invention ;
- la figure 3 est une vue en coupe longitudinale de l'embout avant introduction de la rotule de l'élément d'accouplement ;
- la figure 4 est à une plus petite échelle, une vue de côté correspondant à la figure 3 ;
- la figure 5 est une vue en coupe longitudinale correspondant à la hémisphériquefigure 3 montrant le déverrouillage et la mise en place de l'élément d'accouplement ;
- la figure 6 est à une plus petite échelle, une vue de côté correspondant à la figure 5 ;
- la figure 7 est une vue en coupe longitudinale montrant le verrouillage de l'élément d'accouplement dans l'embout ;
- la figure 8 est à une plus petite échelle, une vue de côté correspondant à la figure 7 ;
- la figure 9 est une vue en perspective avant montage des principaux éléments de l'embout selon une forme préférée de l'invention ;
- la figure 10 est une vue en perspective de l'embout montré à la figure 9 considéré en vue de dessous après introduction de l'organe poussoir ;
- la figure 11 est une vue semblable à la figure 10 considérée en vue de dessus ;
- la figure 12 est une vue en coupe de l'embout avant introduction de la rotule ;
- la figure 13 est une vue semblable à la figure 12 montrant l'introduction de la rotule ;
- la figure 14 est une vue semblable à la figure 12 après introduction et verrouillage de la rotule ;
- la figure 15 est une vue en coupe longitudinale de l'embout montrant le montage de la tête dans une bague de filtration ;
- la figure 16 est une vue en plan et en coupe considérée selon la ligne 16-16 de la figure 15.

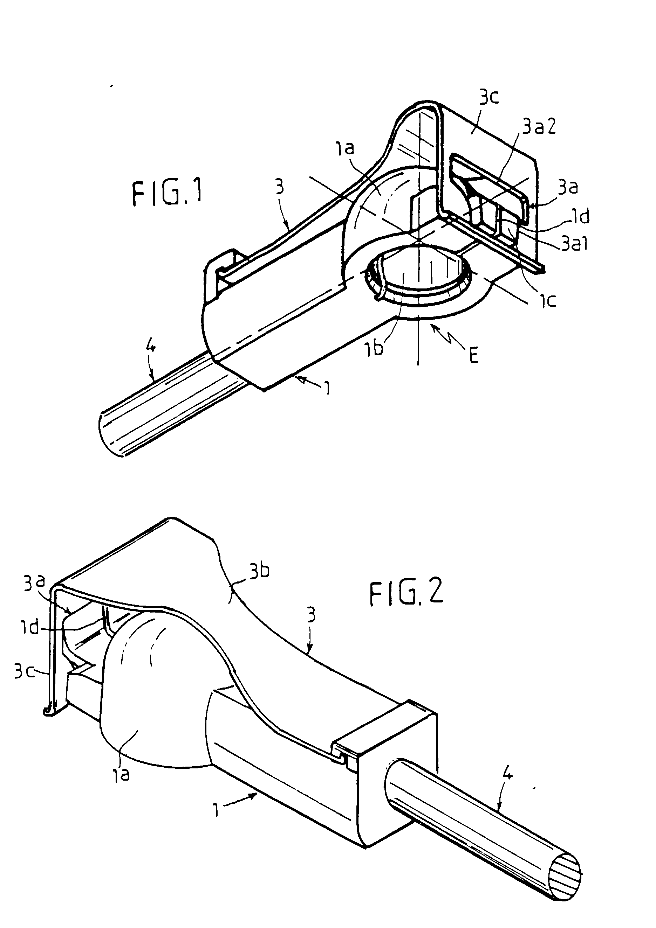

Comme le montrent les figures 1 et 2, l'embout désigné dans son ensemble par (E), comprend un corps (1) présentant, à l'une de ses extrémités, une tête (1a) avec une empreinte en creux (1b), de forme générale hémisphérique. L'empreinte (1b) permet le montage d'une manière multidirectionnelle, d'une partie complémentaire de l'accouplement à réaliser, sous forme d'une rotule (2) notamment. L'empreinte (1b) constitue donc une cage hémisphérique pour le montage à libre articulation de la rotule (2).

Selon une première forme de réalisation, la tête (1a) présente, en débordement de sa périphérie, un nez (1c) apte à coopérer, comme il sera indiqué dans la suite de la description, avec une languette de verrouillage (3), solidaire du corps (1) avec capacité de déformation élastique.

De manière importante, l'ensemble de la tête (1a) et du nez (1c) sont fendus en (1d). La fente (1d) est formée dans le plan axial aux efforts appliqués à la rotule, pour son introduction dans la cage hémisphérique (1b). La fente (1d) débouche dans la cage hémisphérique (1b) pour lui permettre, d'une manière volontaire, une expansion diamétrale.

Le nez (1c) coopère avec une ouverture profilée (3a) que présente la languette de verrouillage (3). Cette ouverture comprend une première zone (3a1) coopérant avec le nez (1c) lorsqu'aucun effort n'est exercé sur la languette (3). Les formes et dimensions de la zone (3a1) correspondent à celles du nez (1c), pour interdire toute expansion diamétrale de la cage hémisphérique (1b). L'ouverture (3a) comprend une seconde zone (3a2) formée dans le prolongement de la zone (3a1). Cette deuxième zone (3a2) est de dimensions plus importantes, et coopère avec le nez (1c) lorsqu'un effort est exercé sur la languette de verrouillage, pour permettre l'expansion diamétrale de la cage hémisphérique (1b). En effet, lorsque le nez (1c) est positionné dans la zone (3a2), ce dernier n'est plus bloqué de sorte qu'une expansion diamétrale est possible.

La languette (3) présente une partie de raccordement profilée (3b) avec le corps (1), et une partie d'extrémité recourbée (3c) dans laquelle est formée l'ouverture (3a). La partie de raccordement (3b) présente un rayon de courbure déterminé, pour permettre à l'ensemble de la languette, d'être déformée par élasticité lorsqu'un effort d'appui est exercé sur cette dernière, afin de positionner le nez (1c) dans la zone (3a2) et le ramener automatiquement dans la zone (3a1) après relâchement de l'effort d'appui.

La languette de verrouillage (3) peut être rapportée sur un agencement que présente le corps (1) de l'embouti. Par exemple, l'extrémité de la partie (3b) peut présenter une nervure de guidage coopérant avec un bossage complémentaire que présente le corps (1).

On n'exclut pas de réaliser l'ensemble de l'embout (1) et de la languette (3) d'une manière monobloc, notamment par injection de matière plastique.

D'une manière connue, le corps (1) de l'embout présente tout agencement pour être rendu solidaire de l'élément d'accouplement qui peut être une tige (4), un câble ou autre. Par exemple, l'ensemble de l'embout (1) peut être surmoulé à l'une ou à chacune des extrémités de l'élément d'accouplement (4). Le corps (1) est formé sensiblement perpendiculairement à la tête (la), la languette (3) est positionnée coaxialement au corps (1) et à la tige (4).

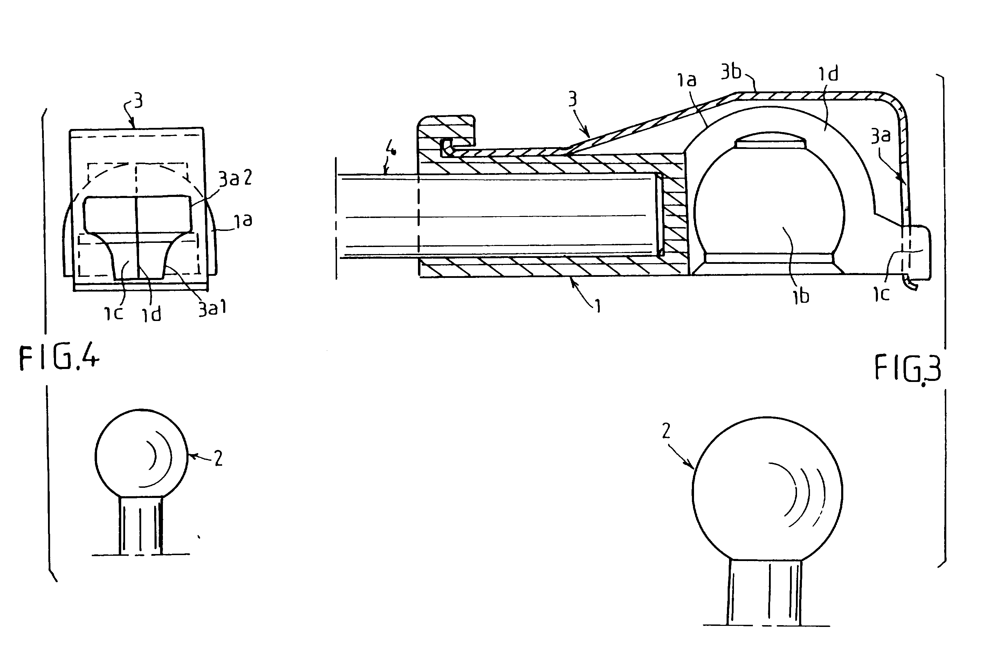

L'utilisation de l'embout selon les caractéristiques de l'invention est illustrée aux figures 3 à 8.

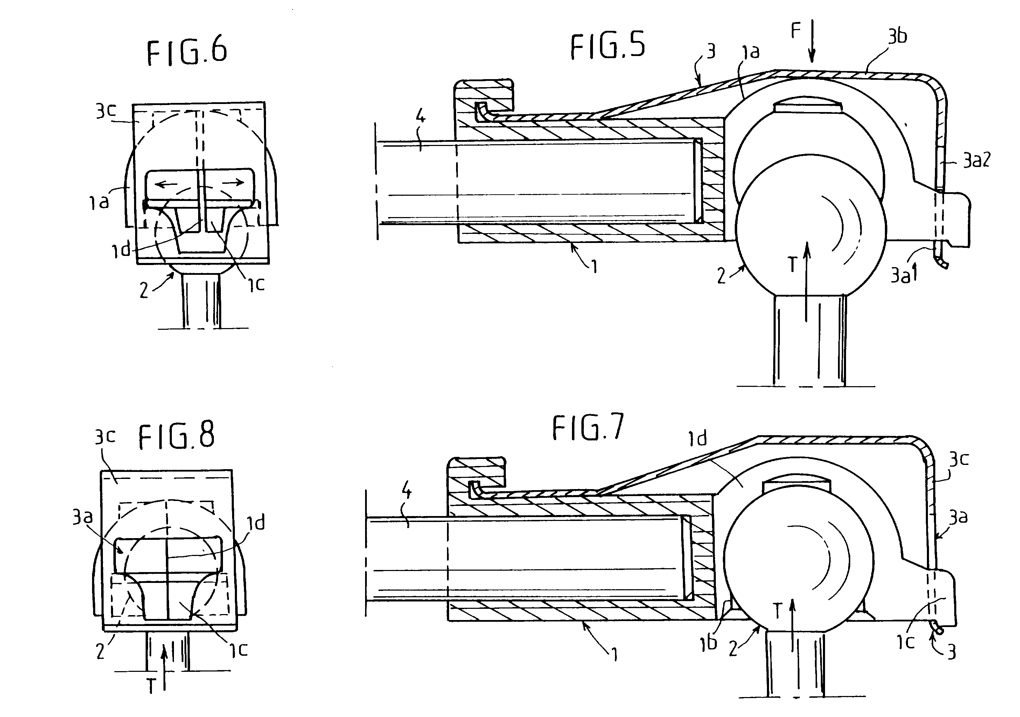

Les figures 3 et 4 montrent l'embout avant introduction de la rotule (2). Dans cette position, aucun effort n'est exercé sur la languette de verrouillage (3), de sorte que le nez (lc) est positionné dans la zone (3al) de l'ouverture (3a). Cette position interdit, comme indiqué précédemment, toute expansion diamétrale de la cage hémisphérique (2).

Lorsqu'on exerce un effort d'appui digital (F) sur la languette (3), cette dernière est déformée élastiquement, de sorte que le nez (1c) échappe la zone (3a1) pour être positionné dans la zone de plus grande dimension (3a2) de l'ouverture (3a). L'ensemble du nez (1c) et de la tête (1a) est donc déverrouillé de sorte que sous l'effort d'introduction (T) de la rotule (2), la cage hémisphérique (1b) peut s'expandre diamétralement, facilitant ainsi l'introduction de la tête rotulienne (2) (figures 5 et 6).

Il suffit ensuite de relâcher la pression exercée sur la languette (3), pour que cette dernière revienne automatiquement dans la position initiale de verrouillage, c'est-à-dire position selon laquelle le nez (1c) coopère avec la zone (3a1) (figures 7 et 8).

Dans cette position, il est impossible d'extraire la rotule (2), étant donné que la languette de verrouillage (3) interdit toute expansion diamétrale de la cage hémisphérique (1b), même sous un fort effort de traction exercé au niveau de la rotule (2). Pour permettre l'extraction de la rotule, il est nécessaire d'appuyer sur la languette (3), pour se replacer dans les conditions illustrées figures 5 et 6.

Il apparait donc que la mise en place de la rotule (2) dans la cage hémisphérique (1b) ne peut se faire sans déverrouillage, tandis que le verrouillage est systématique après la mise ne place de ladite rotule. L'ordre illustré aux figures 3, 4 puis 5, 6 et enfin 7, 8 est donc immuable.

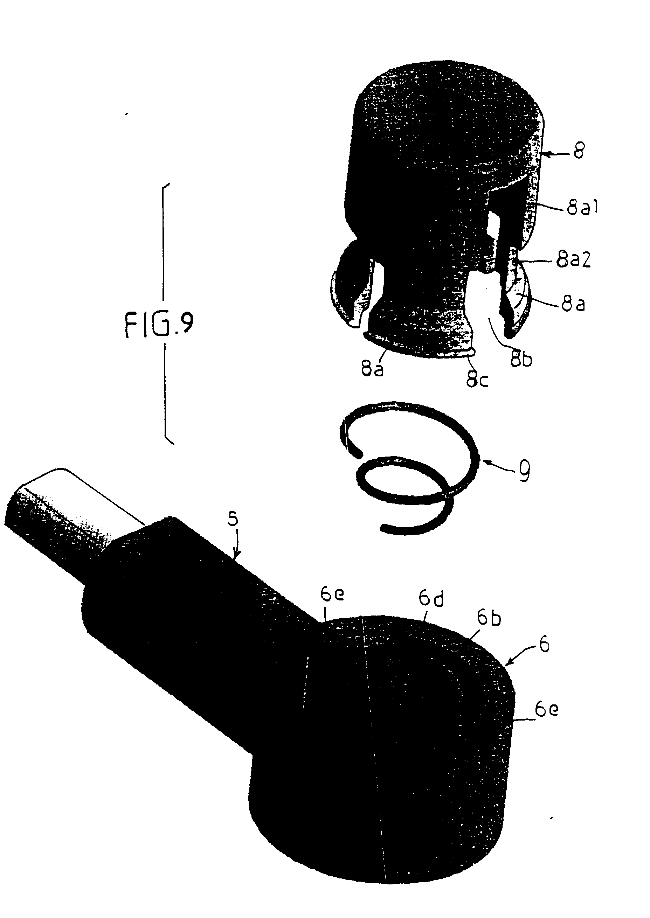

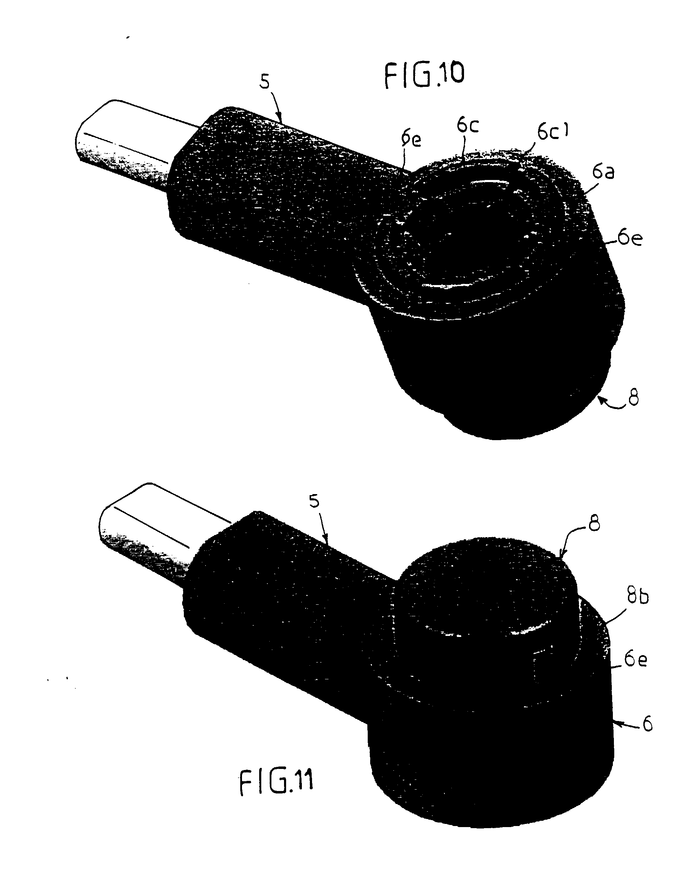

Dans la forme de réalisation des figures 9 à 16, l'embout présente de manière connue un corps (5) prolongé à l'une de ses extrémités par une tête (6) présentant une empreinte en creux (6a) de forme générale hémisphérique. L'empreinte (6a) permet le montage, de manière multidirectionnelle, d'une partie complémentaire de l'accouplement à réaliser sous forme d'une rotule (7). L'empreinte (6a) constitue une cage pour la libre articulation de la rotule (7).

Selon une caractéristique importante de l'invention, l'empreinte (6a) présente radialement des agencements de retenue (6c) de la rotule (7) qui sont aptes à être déformés élastiquement au moment de son introduction. L'empreinte (6a) est formée à l'intérieur de la tête (6) en délimitant un espace annulaire (6b) pour le montage d'un organe poussoir (8).

Autrement dit, l'empreinte est formée à partir d'un corps cylindrique (6d) rendu solidaire, par tout moyen connu et approprié, et d'une manière concentrique, d'un alésage circulaire que présente la tête.

L'organe poussoir (8) est monté dans l'espace annulaire (6b) avec capacité de déplacement guidé et présente des agencements destinés à coopérer ou non avec les agencements de la tête (6) pour permettre l'expansion diamétrale ou non de l'empreinte (6a) en fonction de son positionnement.

Les agencements de l'empreinte (6a) sont constitués par des pattes (6c) formées selon les génératrices du corps (6d). Les pattes sont déformables élastiquement et inscrites dans l'espace annulaire (6b) de la tête. Par exemple, la tête (6) présente quatre pattes (6c) séparées par des échancrures (6c1). La base de chacune des pattes présente un profil interne de retenue (6c2) déterminé pour assurer la retenue de la rotule (7).

On rappelle que l'espace annulaire (6b) résulte de la différence de diamètre des formes géométriques de l'alésage interne circulaire de la tête et du diamètre externe du corps cylindrique à partir duquel est formée l'empreinte (6a) avec les pattes (6c).

L'organe poussoir (8) est formé par un corps creux de forme générale cylindrique présentant des pattes (8a) déformables élastiquement et disposées, après introduction dans l'espace annulaire (6b), en correspondance avec les pattes (6c) de l'empreinte (6a). La base des pattes (8a) présente un profil externe (8a1) apte à coopérer avec l'espace annulaire (6b) correspondant, comme il sera indiqué dans la suite de la description, au blocage des pattes (6c) de l'empreinte. Le profil (8a1) est prolongé par un évidement (8a2) pour permettre l'expansion diamétrale des pattes (8a) en position de dégagement dudit profil correspondant au déverrouillage pour l'introduction de la rotule.

La tête (6) et l'organe poussoir (8) présentent des moyens complémentaires de guidage et d'indexation. Par exemple, la tête peut présenter deux bossages (6e) diamétralement opposés et formés dans l'espace annulaire sur la totalité de la hauteur de la tête. Ces deux bossages coopérent avec deux lumières (8b) diamétralement opposées et formées selon les génératrices de l'organe poussoir (8). L'organe poussoir est monté dans l'espace annulaire (6b) de la tête (6) avec capacité de déplacement à l'encontre d'un ressort de rappel (9). Ce ressort (9) est monté dans le fond de l'organe poussoir (8) en appui sur la tête (6).

On explique ci-après le verrouillage de l'embout selon les caractéristiques de l'invention.

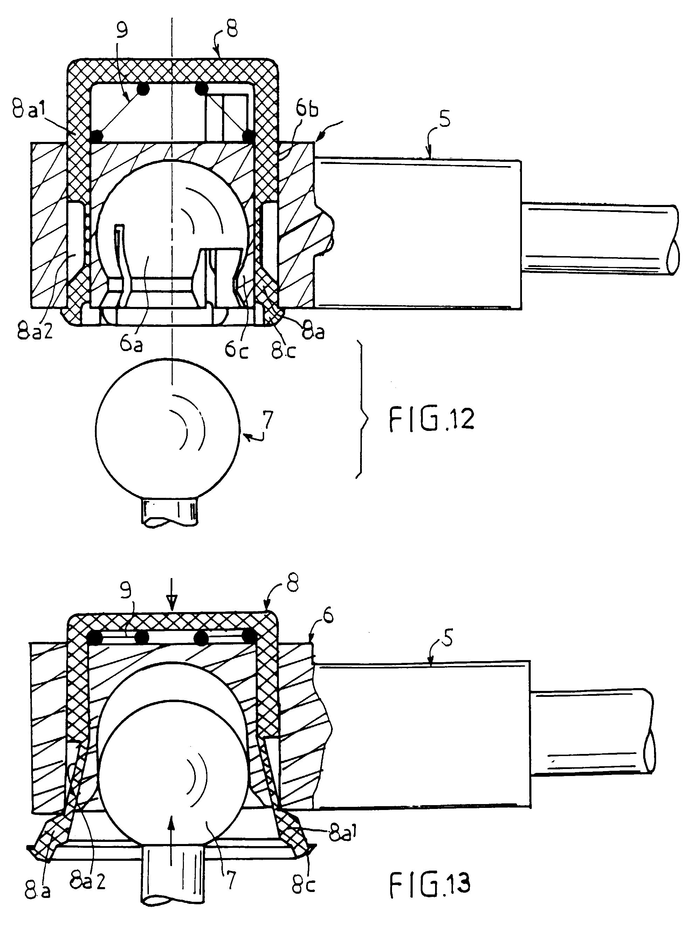

A la figure 12, l'embout est illustré avant introduction de la rotule (7) dans l'empreinte (6a) de la tête (6) Dans cette position, aucun effort n'est exercé sur l'organe de verrouillage (8) de sorte que le profil externe (8a) est positionné dans l'espace annulaire (6b) interdisant toute expansion diamétrale des pattes (6c) de la cage hémisphérique (6a). L'organe poussoir est maintenu dans sa position par le ressort de rappel (9). A noter que l'extrémité des pattes (4a) présente un bourrelet de retenue (4c) coopérant avec le bord circulaire de la tête (6).

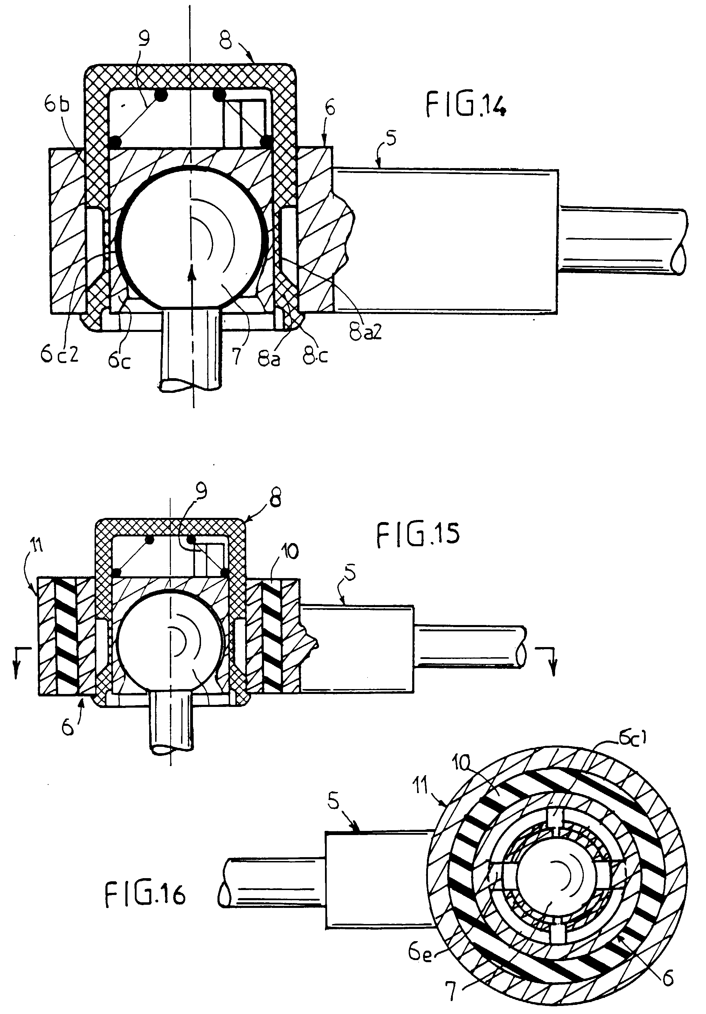

Pour permettre l'introduction de la rotule (7) dans la cage hémisphérique (6a), il suffit d'exercer un effort d'appui sur l'organe poussoir (8) pour permettre au profil (8a1) d'échapper à l'espace annulaire (6b). Dans cette position, les évidements (8a2) sont disposés en débordement de la tête pour permettre l'expansion de l'ouverture de l'empreinte ou cage hémisphérique (6a). En effet, dans cette position, lors de l'introduction de la rotule (7) dans la cage hémisphérique (6a), les pattes (6c) et (8a) peuvent s'écarter pour permettre l'introduction de la rotule (6) dans la cage hémisphérique (6a) (figure 13).

Il suffit ensuite de relâcher la pression exercée sur le poussoir (8) pour que ce dernier revienne automatiquement, sous l'effet de la détente du ressort (9), dans la position initiale de verrouillage (figure 14). Dans cette position, il est impossible d'extraire la rotule (7) étant donné que l'organe poussoir de verrouillage (8) interdit toute expansion des pattes de l'empreinte hémisphérique, même si l'on exerce un effort important de traction au niveau de la rotule (7). En effet, les pattes (6c) sont bloquées par les pattes (8a) du poussoir (8). Pour permettre l'extraction de la rotule, il est nécessaire d'appuyer sur l'organe poussoir pour se replacer dans la position illustrée à la figure 13.

Il en résulte que la mise en place de la rotule dans la cage est impossible tant que l'organe poussoir n'est pas enfoncé tandis que le verrouillage est systématique après introduction de la rotule, c'est-à-dire relâchement de l'organe poussoir (8).

Compte tenu des moyens et agencements de verrouillage dans les conditions indiquées, il est possible de réaliser une tête (6) de forme générale cylindrique. Ces dispositions s'avèrent particulièrement importantes étant donné qu'il est possible de monter la tête (6) d'une manière concentrique à une bague de filtration (10) de tout type connu et approprié. Généralement, la bague de filtration (10) est constituée par une bague en matière élastique apte à absorber les vibrations, cette bague étant rendue solidaire de l'alésage d'une douille (11) en matériau rigide (figures 15 et 16).

Les avantages ressortent bien de la description, en particulier on rappelle et on souligne :
- Le faible effort d'introduction pour la mise en place de la rotule.
- Le verrouillage positif pour l'extraction.
- Le verrouillage dans le même mouvement que l'introduction en un seul temps et non plus selon des phases distinctes.
- Le verrouillage axial automatique après mise en place de la biellette.
- Démontage possible de la biellette, mais seulement d'une manière volontaire, sans aucune destruction et un nombre de fois illimité.
- La possibilité de combiner la tête avec tout système de filtration connue.

## Revendications

1. Embout verrouillable pour élément d'accouplement comprenant une tête (1a)-(6) avec une empreinte en creux (1b)-(6a) de forme générale hémisphérique et présentant des agencements de retenue d'une partie complémentaire sous forme d'une rotule (2)-(7), et aptes à être déformés élastiquement sous un effort d'introduction de ladite rotule, caractérisé en ce que les agencements coopèrent avec des moyens de verrouillage (3)-(8) aptes à permettre l'expansion diamétrale ou non de l'empreinte en fonction du positionnement desdits moyens (3)-(8) pour permettre, sous un effort de poussée exercé sur ces moyens de verrouillage, de libérer les agencements de retenue et autoriser, d'une manière concomitante, une expansion diamétrale de l'empreinte sous un effort d'introduction de la rotule (2)-(7) et, après cessation dudit effort de poussée, le blocage desdits agencements correspondant au verrouillage de la rotule.

2. Embout verrouillable selon la revendication 1, caractérisé en ce que l'empreinte (2a) est formée à l'intérieur de la tête, à partir d'un corps cylindrique (2d) délimitant un espace annulaire (2b) pour le montage des moyens de verrouillage, sous forme d'un organe poussoir (4) avec capacité de déplacement guidé, ledit organe (4) présentant des agencements destinés à coopérer ou non avec les agencements (2c) de la tête pour permettre l'expansion diamétrale ou non de l'empreinte en fonction du positionnement dudit organe.

3. Embout verrouillable selon la revendication 1, caractérisé en ce que l'organe (8) est monté avec capacité de déplacement à l'encontre d'un moyen élastique (9) sous forme d'un ressort monté dans le fond de l'organe poussoir (4), en appui sur la tête (6).

4. Embout verrouillable selon la revendication 1, caractérisé en ce que les agencements de l'empreinte sont constitués par des pattes (6a) déformables élastiquement et inscrites dans l'espace annulaire (6b) de la tête, la base desdites pattes (6c) présentant un profil interne de retenue.

5. Embout verrouillable selon l'une quelconque des revendications 1 et 2, caractérisé en ce que les agencements de l'organe poussoir (8) sont constitués par des pattes déformables élastiquement (8a), disposées en correspondance avec celles (6c) de l'empreinte (6a), la base desdites pattes (8a) présentant un profil externe (8a1) apte à coopérer avec l'espace annulaire de la tête correspondant au blocage des pattes (6c) de l'empreinte, ledit profil (8a1) étant prolongé par un évidement (8a2) pour permettre l'expansion diamétrale des pattes (8a) de l'organe en position de dégagement correspondant au déverrouillage pour l'introduction de la rotule.

6. Embout verrouillable selon la revendication 1, caractérisé en ce que la tête (6) et l'organe poussoir (8) présentent en combinaison des moyens complémentaires de guidage et d'indexation.

7. Embout verrouillable selon la revendication 1, caractérisé en ce que l'organe (8) présente au niveau de l'extrémité ouverte des pattes un bourrelet de retenue (8c) coopérant avec le bord circulaire de la tête (6) en position de verrouillage.

8. Embout verrouillable selon la revendication 1, caractérisé en ce que la tête (6) est réalisée à partir d'un corps cylindrique et est montée concentriquement dans une bague élastique (10) filtrante elle-même solidaire d'une douille (11) en matériau rigide.

9. Embout verrouillable selon la revendication 1, caractérisé en c que les agencements de ladite tête (1a) sont constitués par un nez fend (1c) formé en débordement de ladite tête (1a) pour être engagé dans un ouverture profilée (3a) des moyens verrouillage (3) sous forme d'un languette profilée solidaire par l'une de ses extrémités de l'embout, et dont l'autre extrémité est recourbée dans un plan sensiblemer perpendiculaire en présentant l'ouverture (3a) dans laquelle est engag le nez (1c).

10. Embout verrouillable selon la revendication 9, caractérisé en ce que la fente (1d) du nez (1c) débouche dans l'empreinte en creux (1b) et est prolongée, au niveau de la tête (1a), pour permettre l'expansion diamétrale de ladite empreinte (1b).

11. Embout verrouillable selon la revendication 9, caractérisé en ce que l'ouverture profilée (3a) de la languette de verrouillage (3)comprend successivement une première zone (3a1) coopérant avec le nez (1c) de la tête (1a) lorsqu'aucun effort n'est exercé sur ladite partie , les formes et dimensions de cette première zone (3a1) correspondant environ à celles du nez (1c) pour interdire toute expansion diamétrale, et une deuxième zone (3a2) de dimensions plus importantes et coopérant avec le nez (1c) lorsque un effort est exercé sur la partie de verrouillage (3) pour permettre l'expansion diamétrale.

12. Embout verrouillable selon la revendication 9, caractérisé en ce que la languette (3) est positionnée coaxialement au corps (1).
